Europäisches Patentamt

European Patent Office

Office européen des brevets

(11) Publication number: **0 425 245 A2**

## EUROPEAN PATENT APPLICATION

(21) Application number: 90311612.7

(51) Int. Cl.5: **F16K 3/02**

(22) Date of filing: 23.10.90

(30) Priority: 23.10.89 ZA 898022

(43) Date of publication of application:
02.05.91 Bulletin 91/18

(84) Designated Contracting States:
AT BE CH DE DK ES FR GB GR IT LI LU NL SE

(71) Applicant: CEMENTATION (AFRICA CONTRACTS) (PROPRIETARY) Limited
50 Booysens Road, Selby
Johannesburg, Transvaal Province(ZA)

(72) Inventor: **Ruzicka, Ladislav**
**Plot 207 Bashewa**
**District Bronkhorstspruit(ZA)**
Inventor: **Van Dalen, Pierre**
**691-24th Avenue**
**Rietfontein, Pretoria(ZA)**

(74) Representative: **Brown, David Leslie**
**Page & Co. Temple Gate House Temple Gate**
**Bristol BS1 6PL(GB)**

(54) **A valve.**

(57) A valve has a housing (20) having an inlet (30) and an outlet (32) and at least one closable access opening (38). The housing (20) defines a flow path along its interior from the inlet (30) to the outlet (32). A closure member (16) is located in the housing (20) and is movable between an operative position in which it is intersected by the flow path and an inoperative position in which it is clear of the flow path and projects out of the housing (20) via the access opening (38). A peripheral seal (54) on the closure member (16) engages the housing (20) to seal off the flow passage from the remainder of the interior of the housing (20) when the closure member (16) is in its operative position. A further seal (74) co-operates with the housing (20) for sealing off the flow passage from the access opening (38) when the closure member (16) is in its inoperative position.

FIG 2

# A VALVE

THIS INVENTION relates to a valve. More particularly it relates to a valve suitable for occasional use as a standby shut-off or isolating valve.

According to this invention there is provided a valve comprising:
a housing having an inlet and an outlet and at least one closable access opening, the housing defining a flow path along its interior from the inlet to the outlet;
a closure member located in the housing and movable between an operative position in which it is intersected by the flow path and an inoperative position in which it is clear of the flow path and projects out of the housing via the access opening;
a peripheral seal on the closure member and engaging the housing to seal off the flow passage from the remainder of the interior of the housing when the closure member is in its operative position; and
a further seal co-operating with the housing for sealing off the flow passage from the access opening when the closure member is in its inoperative position.

In one embodiment, the closure member may have an opening therethrough which permits flow along the flow path when the closure member is in its operative position. The peripheral seal may then be provided radially outwardly of the opening defined in the closure member. A closure plate may then be provided for releasable mounting on the closure member to close off and seal the opening in the closure member, to close off the flow passage and isolate the inlet from the outlet, when the closure member is in its operative position.

In another embodiment, the closure member may be in the form of a solid gate so that when in its operative position, it blocks the flow path, the closure member being displaceable to its inoperative position out of the flow path thereby to permit fluid flow along the flow path through the housing.

The access opening may be arranged to permit access to and maintenance or replacement of the peripheral seal and to permit mounting and dismounting of the closure plate on the closure member, when the closure member is in its inoperative position.

In one embodiment there may be a single access opening and the further seal may comprise a slidably displaceable sleeve through which the flow path passes, eg located in the housing and longitudinally movable relative to the flow path between an open position in which it is downstream clear of the access opening and a closed position when it seals off the access opening, when the closure member is in its inoperative position.

The sleeve may be located within the housing with the sleeve in the open position being situated towards the outlet of the housing.

The sleeve may be accessed in the open position via the outlet, when the closure plate is mounted on the closure member to close off and seal the opening and the closure member is in its operative position thereby closing off the flow passage.

In a preferred embodiment the further seal may be mounted on the closure member, the further seal acting to engage the housing to seal off the flow passage from the access opening when the closure member is in its inoperative position. The peripheral seal and the further seal may have passages in communication with the flow path thereby to permit pressure in the flow path to urge the seals onto their seats.

The housing may have a further access opening, the access openings being spaced from each other and the further access opening may be arranged to permit access to and maintenance is displaced into the further access opening.

When the closure member has an opening therein, the opening may be of substantially the same shape and size as the cross-section of the flow path between the inlet and outlet of the housing so as to reduce throttling and/or turbulence in flow of fluid along the flow passage when the opening is in register with the flow passage with the closure member in its operative position. Typically the closure member will have a square or rectangular periphery with a circular opening therethrough and the closure plate will thus be a circular disc. When the closure member is in the form of a solid gate, the periphery of the closure member may be circular, square, rectangular, or the like.

Means may be provided for displacing the closure member from the operative position to the inoperative position and vice versa.

The valve may include a further housing releasably connected to the access opening into which the closure member projects when it is in the inoperative position.

The further housing may have one or more doors therein, providing access to the closure member when it is in the inoperative position. When the closure member has an opening therein, one of these doors may serve as mounting means for mounting the closure plate on its inner surface in a position registering with the opening of the closure member when the closure member is in its inoperative position and the further housing is connected to the access opening.

The means for displacing the closure member from the operative position to the inoperative position may be located in or on the further housing.

The inlet and outlet of the housing in use will be coupled to a conduit or pipeline. Thus, the inlet and outlet may in use be welded to the pipeline or conduit.

An embodiment of the invention will now be described with reference to the accompanying schematic drawings, in which:

Figure 1 is a three-dimensional view of a valve in accordance with the invention in use, in a dormant operative condition in a pipeline;

Figure 2 is an axial sectional side elevation in the direction of a line II-II in Figure 3, of the valve of Figure 1 in its dormant condition;

Figure 3 is a partial axial sectional plan view in the direction of line III-III in Figure 2 of the valve of Figure 1;

Figure 4 is a partial view corresponding to Figure 1 with the valve in an inoperative condition with a further housing mounted on the valve;

Figure 5 is a view similar to Figure 2 of the valve of Figure 4 in its inoperative condition;

Figure 6 is a partial axial sectional side elevation of an upper portion of a modification of the valve in its dormant operative condition; and

Figure 7 is a partial axial sectional side elevation of a lower portion of the valve of Figure 6 in an operative closed condition.

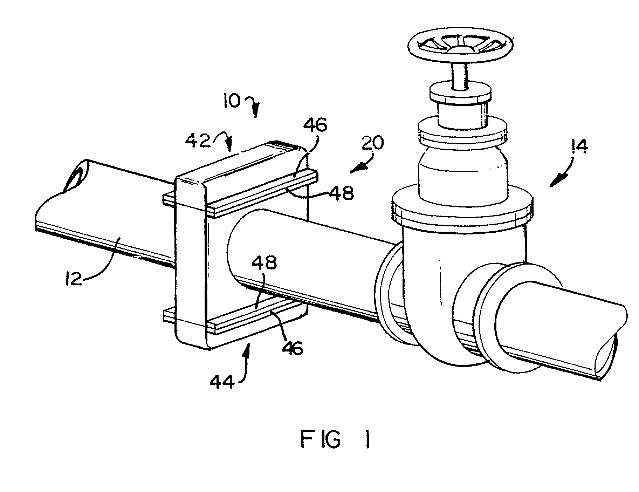

Referring to Figures 1 to 5, reference numeral 10 refers generally to a valve in accordance with the invention.

The valve 10 is installed as a standby valve in a pipeline 12, upstream of a service valve 14 which can for example be in the form of a flow control valve installed in the pipeline 12.

In normal day to day operation of the valve 10, as shown in Figures 1 to 3 it will be in its dormant operative condition allowing fluid flow therethrough.

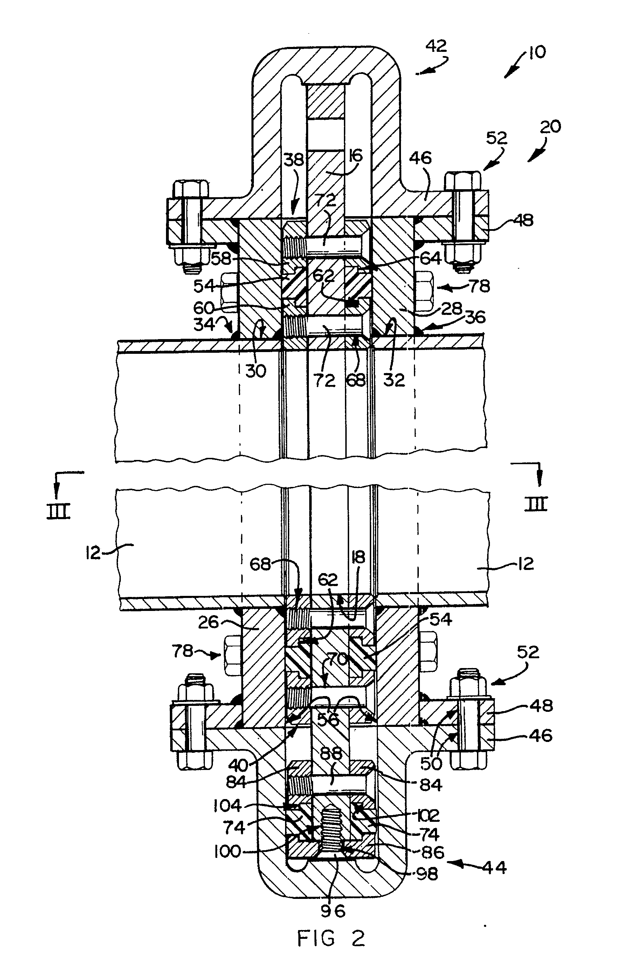

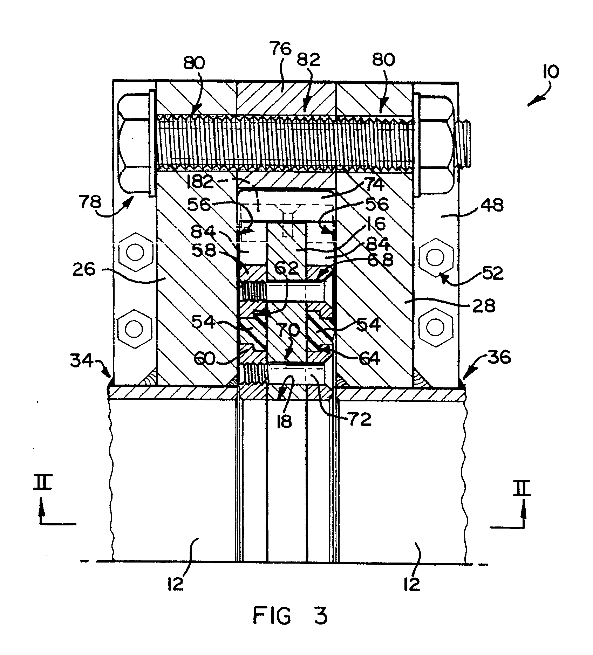

The valve 10 has a closure member 16 (see Figures 2 and 3) having a central opening 18 therethrough. The member 16 has an operative position in which the opening 18 is in register with a flow path through the valve 10, thereby permitting substantially unimpeded flow of fluid along the pipeline 12. The closure member 16 is located in a housing 20.

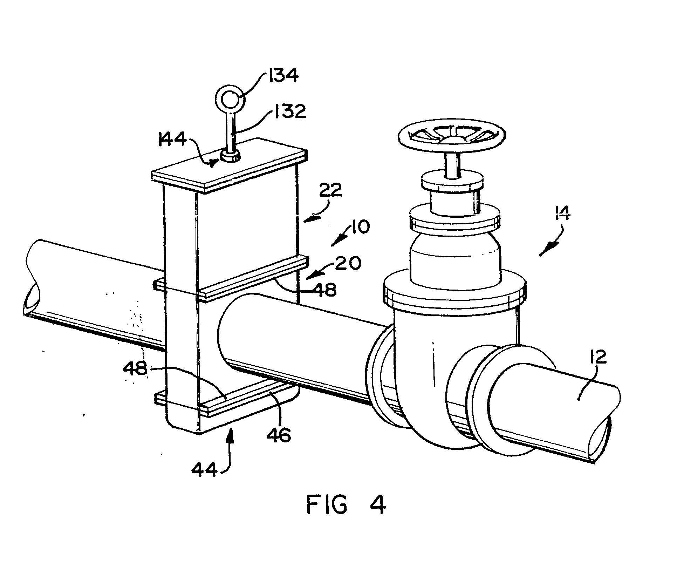

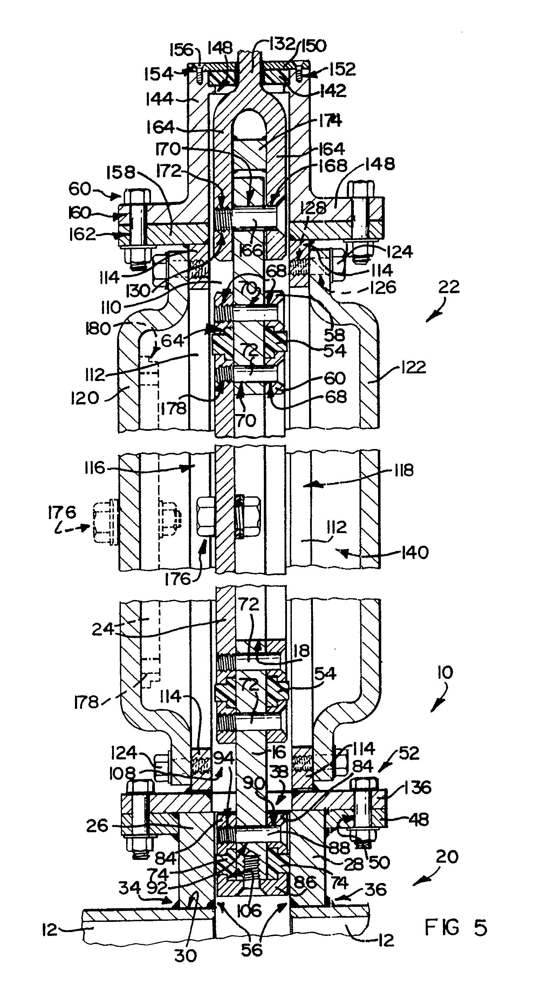

The valve 10 will intermittently be required to close off the pipeline 12, for example when maintenance work is to be done on the valve 14. To effect this a further housing 22 will be mounted on the valve 10 as shown in Figures 4 and 5, to enable the closure member 16 to be withdrawn partly from the housing 20 of the valve 10, clear of the flow path, into an inoperative open position in which it projects from the housing 20 into the housing 22. A closure plate 24 (Figure 5) can then be mounted on the closure member 16 to close the opening 18, so that when the closure member 16 is returned to its operative position (Figure 2) it will seal off the flow path, thereby stopping liquid flow along the pipeline 12 and enabling the maintenance work to be done on the valve 14.

With particular reference to Figures 1 to 3, the housing 20 is narrow, laterally flattened and of box-shaped rectangular construction, having a pair of major substantially square opposed walls 26, 28 closely spaced from each other. The housing 20 has a circular inlet 30 and circular outlet 32, opposed to each other and passing centrally through the Walls 26 and 28 respectively. The pipeline 12 is interrupted at the valve 10, and the pipeline ends at the interruption are respectively welded into the inlet 30 and outlet 32 at 34 and 36. The housing 20 defines a flow path which is circular in cross-section, and which passes through the housing 20 from the pipeline end in the inlet 30, to the pipeline end in the outlet 32, spanning the narrow gap between the walls 26 and 28.

The housing 20 has a pair of elongate rectangular access openings 38 and 40 located respectively at the top and bottom of the housing 12. The access openings 38 and 40 respectively have elongated covers 42 and 44 removably mounted on the housing 20, the covers each having flanges 46 along their longer edges, for attachment to complementary flanges 48 provided on the walls 26, 28 at the access openings 38 and 40. Each of the flanges 46, 48 has a row of spaced apertures 50 via which the covers 42, 44 are bolted to the housing by bolts 52 (see Figure 2) in the dormant condition.

The closure member 16 is a substantially square plate and its opening 18 is of substantially the same diameter as the pipeline ends, and hence substantially the same diameter as the flow path, to permit unrestricted flow with minimum throttling in the operative position of the closure member 16.

There are two circular peripheral seals 54 mounted on the closure member 16 surrounding and spaced radially outwardly of the opening 18, mounted respectively on the inlet side and outlet side of the closure member 16. The seals 54 respectively engage the inner surfaces 56 of the walls 26, 28, to seal off the flow path from the remainder of the interior of the housing 20.

The seals 54 are removably fastened to the closure member 16 by a retaining ring assembly comprising two pairs of coaxial retaining rings one for each seal 54, a radially outer ring 58 and a radially inner ring 60. The rings 58, 60 have longitudinally extending rebates 62 which engage longitudinally extending shoulders 64 on the seals 54, to hold the seals against opposed sides of the closure member 16. Each of the retaining rings 58, 60 has a plurality of apertures 68 therein equally circumferentially spaced. The closure member 16 has two concentric rings of spaced apertures 70 passing therethrough corresponding with the positions of the apertures 68 of the rings 58, 60. The seal 54 is fastened to the closure member 16 by screws 72 passing through the apertures 68 of the retaining rings 58, 60 which are on the outlet side of the closure member 16, then through the apertures 70 in the closure member 16, and then into the apertures 68 of the retaining rings 58, 60 on the inlet side of the closure member 16. The apertures 68 of the rings 58, 60 on the outlet side of the member 16 and the apertures 70 of the member 16 are smooth bores, whereas the apertures 68 in the rings 58, 60 on the inlet side of the closure member 16 are threaded and screwingly engage threaded shanks of the screws 72. The radially inner peripheries of the rings 60 are of the same diameter as the opening 18, and the pipeline ends welded into the walls 26, 28, and extend from the opening 18 axially in opposite directions in register therewith, up to the pipeline ends at the inlet 30 and outlet 32, thereby enclosing the periphery of the flow path between the opening 18 and the pipeline ends.

In the embodiment illustrated, there is a further seal which comprises a strip 74 of sealing material mounted on the closure member 16 to extend, in the embodiment illustrated, horizontally along and adjacent the lower edge of the closure member 16, on opposite sides thereof. The strip 74 of sealing material is in the form of a continuous loop of sealing material which surrounds and passes over the vertical side edges of the closure member 16.

The sealing material of the strip 74 engages the surfaces 56 of the walls 26, 28 to seal off the flow passage from the access opening 38 when the closure member 16 is in its inoperative position.

With particular reference to Figure 3, the gaps between the vertical edges of the walls 26, 28 on opposite sides of the housing 20 are closed off by spacers 76, each clamped in position between the walls 26, 28 by a series of vertically spaced bolts 78 passing through apertures 80 in the walls 26, 28 and apertures 82 in the spacers 76. The upper and lower ends of the spacers 76 seal against the covers 42 and 44 respectively.

The strip 74 of sealing material is removably fastened to the closure member 16 by a retaining element assembly which comprises two elongated straight retaining elements 84 respectively on opposite sides of the closure member 16, and an elongated retaining element 86 extending along the lower edge of the closure member 16. The elements 84 are parallel to and spaced upwardly from the element 86, with the strip 74 extending along the space defined by said spacing. The retaining elements 84 are attached, in a fashion similar to the attachment of the retaining rings 58, 60, to the closure member 16 by screws 88 passing through smooth bores 90 in the outlet side element 84, smooth bores 92 in the element 16 and engaging threaded bores or passages 94 in the inlet side element 84.

The element 86 is in turn held in position by screws 96 passing upwardly through smooth bores 98 in the element 86, into threaded sockets 100 in the lower edge of the closure member 16. The screws 88 and 96 are respectively arranged in spaced series extending horizontally in the direction of the lower edge of the closure member 16, the bores 90, the bores 92, the passages 94 and the sockets 100 correspondingly being arranged in parallel spaced series, parallel to the lower edge of the member 16.

In the fashion of the seal 54 and rings 58, 60, the strip 74 has shoulders 102 which engage rebates 104 on the elements 84 and rebates 106 on the element 86, whereby the strips 74 of sealing material are held on opposite sides of the closure member 16.

The sealing material of the strips 74, where it passes over and around the vertical side edges of the closure member 16 (see Figure 3) seals against the inner surfaces of the spacers 76.

The sealing material of the strip 74 is maintainable, without taking the pipeline 12 out of commission, via the access opening 40. The cover 44 covering the access opening 40 is thus unbolted to provide access to the strip 74 of sealing material and associated retaining elements 84, 86 which protrude downwardly from between the walls 26, 28, so that maintenance work may be carried out freely thereon. The seals 54 seal off the flow path from the opening 40 and indeed from the whole of the interior of the housing 20 outside the flow passage when the closure member 16 is its operative position, so that removal of the cover 44 and work on the strip 74 of sealing material in no way affects fluid flow along the flow path.

When it is required to close off and seal the flow path, the valve 10 is transformed into its inoperative condition, and the further housing 22 is mounted on the housing 20 as shown in Figures 4 and 5.

The further housing 22 is similarly laterally flattened and box shaped, and has a lowermost opening 108 corresponding in shape to the access opening 38 of the housing 20. The housing 22 comprises a frame which provides vertical side walls 110 for the housing 22. Flanges 112 project laterally inwardly from the opposite edges of the side walls, and cross members 114 join the upper and lower ends of the flanges 112. The lower ends of the walls 110 and the lower sides of the cover cross members 114 define the opening 108. Two square openings 116 and 118 into the housing 22 are defined by frames provided by the flanges 112 and cross members 114, facing out of the housing 22 in the longitudinal direction of the pipeline 12. These openings 116, 118 are covered by square outwardly dished cover plates 120 and 122 respectively, the cover plates at their peripheries being bolted to the housing 22 by a plurality of peripherally spaced bolts 124 passing through bores 126 in the peripheries of the cover plates 120, 122 and engaging sockets 128 in the flanges 112 and cross members 114.

The top of the housing 22 is elongate rectangular and has a centrally situated aperture 130 which opens upwardly, and through which a stem 132 of a lifting handle 134 passes. The aperture 130 is defined between the upper ends of the side walls 110 and upper cross members 114.

The housing 22 is mounted on the housing 20 over the access opening 38 by unbolting the cover 42 and bolting the housing 22 thereon using the same bolts 52. The opening 108 has flanges 136 along its longer edges having a series of spaced apertures 138 therethrough for attachment by the bolts 52 to the flange 48 on the housing 20 around the access opening 38. The flange 136 is welded to lower ends of the walls 110 and lower ends of the flanges 112, and to the lower sides of the lower cross members 114.

It will be appreciated that the closure member 16 may be lifted out of the housing 20 via the access opening 38 into the interior 140 of the housing 22, by lifting the lifting handle 134. The lifting handle 134 is shown for ease of illustration, simply provided, at the upper end of the stem 132. There is shown a seal 142 in a hollow tubular boss 144 on a cover plate 146. The boss 144 has an internal circumferential shoulder 148 spaced downwardly from its upper edge and the seal 142 is held against the shoulder 148 by an annular ring 150. The upper edge of the curved wall of the boss 144 has a plurality of circumferentially spaced sockets 152 and the ring 150 has a plurality of correspondingly circumferentially spaced openings 154 through which screws 156 pass to hold the ring 150 on the boss 144.

A flange 158 is welded to the upper ends of the side walls 110 and upper ends of the flanges 112, and to the upper sides of the upper cross members 114. The plate 146 and the flange 158 respectively have peripherally spaced series of apertures 160 and 162, whereby they are bolted together by bolts 60.

It will be appreciated that the handle 134 is shown merely by way of example for a closure member 16 which can be lifted by hand, and, instead, lifting means such as a hydraulic jack, or a rotatable hand wheel fast with a screw-threaded stem engaging a running nut fast with the upper edge of the closure member 16 can be used, the choice of lifting means depending on the application to which the valve 10 is to be put, and also to a large degree on the mass of the closure member 16 which has to be lifted, which can be considerable with large diameter pipelines 12 having diameters of a meter or more.

The handle 134 is releasably attached to the upper edge of the closure member 16 via the stem 132 which has a bifurcated lower end with two spaced limbs 164. A screw 166 passes through a bore 168 in one of the limbs 164, and through a bore 170 through the closure member 16 centrally positioned and downwardly adjacent its upper edge, the screw engaging a threaded aperture 172 in the other limb 164. The stem 132 can accordingly be detached from the closure member 16 by unscrewing the screw 166. The limbs 164 of the stem are held in spaced relationship by a spacer 174.

The disc-shaped closure plate 24 is provided for releasable mounting on the closure member 16 to close off and seal the opening 18 therein, so that the closure member 16, when in the operative position, seals off the flow path to permit maintenance of the service valve 14.

The closure plate 24 is shown in Figure 5 in solid lines in its operative position closing off the opening 18 and is shown in dotted lines in its storage position mounted by a pair of laterally spaced bolts 176 on the inner surface of the cover plate 120. The bolts 176 pass through registering passages (not shown) respectively in the cover plate 120 and closure plate 24, to keep the closure plate 24 in a fixed orientation. Naturally, if desired, the closure plate 24 can be stored elsewhere, but it is convenient to store a large heavy closure plate 24 on the cover plate 120, as will emerge hereunder.

The closure plate 24 has a plurality of circumferentially spaced threaded apertures 178 at its periphery and has a peripheral rebate 180, corresponding to the rebate 62 of the retaining ring 60 and the apertures 68 of the retaining ring 60.

Mounting of the closure plate 24 on the closure member 16 is carried out when the closure member 16 is in its inoperative position (Figure 5), access being provided to the interior 140 of the housing 22 by unbolting the cover plates 120, 122. The screws 72 are then unscrewed to permit removal of the retaining ring 60, which are then used to screw the closure plate 24 in position, the rebate 180 of the closure plate 24 holding the adjacent seal 54 in position.

If the valve 10 is installed in a confined space so that the cover plate 120 cannot be unbolted, or if the closure plate 24 is extremely heavy, the closure plate 24 can be mounted on the inside of the cover plate 120 by the bolts 176 as described above in its storage position. The closure plate 24 can then be mounted on the closure member 16 merely by unbolting the cover plate 122 to open the opening 118 into the interior 140 of the housing 22. This provides access to the closure plate 24 via the opening 18 through which the ring 60 can be removed and via which the closure plate 24 can be manipulated into position on the closure member 16. In this case the retaining ring 60 will be of split construction, in two semi-circular halves, which can be withdrawn through the opening 118.

Particularly when the closure plate 24 is heavy, two or more guide rods (not shown) can be slid via the opening 118 through selected apertures 68, 70 respectively in the outlet side retaining ring 60 and closure member 16, and into corresponding registering apertures 178 in the closure plate 24. After the bolts 176 have been released, the closure plate 24 can be slid along these guide rods into position in contact with the closure member 16, where it can be screwed into position by the screws 72, the apertures 178 automatically registering with the apertures 70. The bolts 176 will be used to close off the passages therefor in the cover plate 24, to prevent leakages through these passages.

Naturally the seal 54 and the associated rings 58, 60, are also accessible for maintenance via the openings 116, 118 when the closure member 16 is in its inoperative position. It will be noted that in this position the closure member 16 is clear of the flow path, so that flow can continue substantially unimpeded during such maintenance.

When the closure plate 24 has been used to close off the flow path, and it is required to restore flow along the flow path, the above procedure can be reversed to remove the closure plate 24, replace the retaining ring 60 and return the closure member 16 to its operative position in the dormant condition of the valve 10. The housing 22 will then be dismounted and replaced by the cover 42.

The valve 10 is accordingly fully maintainable without taking the pipeline 12 out of commission, flow being no more than slightly impeded while the closure member 16 is moved between its operative and inoperative positions. The strip 74 of sealing material is fully maintainable when the closure member 16 is in its operative position as described above and the seal 54 is fully maintainable when the closure member 16 is in its inoperative position, clear of the flow path, as described above.

It is thus a major advantage of the valve 10 as illustrated that it is fully maintainable without taking the pipeline 12 out of commission, and the valve 10 does not need to be isolated when maintenance work is carried out on it. The valve 10 is of simple construction, and can be manufactured at low cost. It is thus feasible in a pipeline 12 to install such a valve 10 upstream of every service valve 14, for shutting off flow in the pipeline 12 when the associated service valve 14 requires maintenance.

It is also possible in principle to use the valve 10 as a flow regulating valve instead of a shut-off valve. It is used in this fashion with the closure plate 24 closing off the opening 18, and with the closure member 16 raised partially so that it is intermediate its operative and inoperative positions, the closure member intruding into and throttling the flow path, and only part of the flow path being open below the closure member 16. In this case annular packing [not shown] can be provided between the retaining rings 58 and 60 on the inlet side of the closure member 16 to provide the closure member 16 with a flat upstream surface to reduce turbulence and frictional pressure losses in the flow of liquid along the pipeline 12.

It should be noted that, while the seals 54 and sealing strip 74 will typically be of a suitable elastomeric sealing material such as rubber, they may instead be of polytetrafluoroethylene (PTFE) or may be lined. with PTFE where they seal against the inner surfaces 56 of the walls 26, 28 of the housing 20. Furthermore, if desired, each vertical side edge of the closure member 16 may be provided with one or more vertically spaced guides, eg in the form of guide blocks as shown at 182 in broken lines in Figure 3, which are spaced between the top and bottom of the closure member 16, the guides acting on the inner surfaces 56 of the walls 26, 28 to guide the member 16 during vertical movement and to resist excessive stressing of the sealing strip 74 by upstream pressure in the pipeline 12 during this movement.

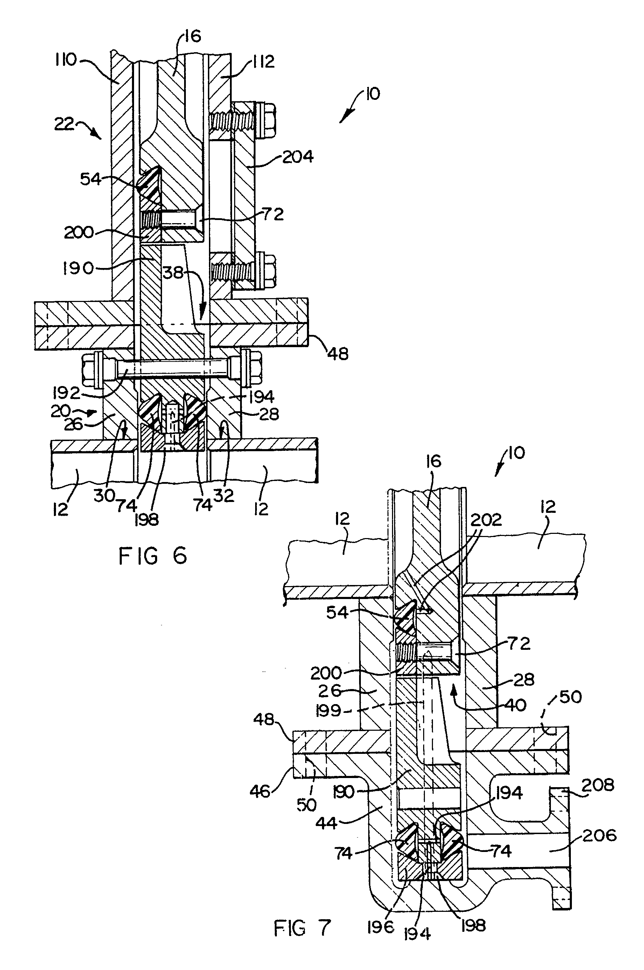

Referring now to Figures 6 and 7, a modification of the valve of the preceding figures is shown. In Figures 6 and 7, similar reference numerals have been used to indicate like parts of the previous embodiment. The main difference between the Figures 6 and 7 embodiment and the previous embodiment is that the closure member 16, whe" in its dormant open position, does not extend into or around the flow path. The closure member 16 thus is now in the form of a solid gate without any opening 18 defined therein. A closure plate 24 is thus no longer required.

In Figure 6, the valve is shown with its upper cover 42 (not shown) removed and the housing 22 fitted onto the housing 20. The closure member 16 has an extension 190 at its lower end and which provides a mounting for the further seal 74. The extension 190 is in the from of an elongate straight bar extending transversely to and radially spaced from the longitudinal axis of the flow path. The extension 190, when the valve is in its dormant open position shown in Figure 6, is held in position by a transverse pin 192 thereby supporting the closure member 16 within the housing 22 above the extension 190. The extension 190 also has passages 194 which allow pressure in the pipeline 12 to urge the seals 74 against the inner faces of the walls 26 and 28 thereby enhancing the sealing capabilities of the seals 74. The seals 74 are again located in a rebate provided in the extension 190 and by an annular ring 196 fixed to the extension 190 by screws 198.

The extension 190 can be fixed to the closure member 16 by elongated screws (not shown) passed through passages 199 (only one of which is shown in Figure 7). The extension 190 need only be fixed to the closure member 16 after the closure member 16 has been displaced downwardly by the stem 132 (not shown in the Figures 6 and 7 embodiment) to the closed position shown in Figure 7 and it is desired to raise the closure member 16 back to its Figure 6 position. In order to fix the extension 190 to the closure member 16, it is necessary to remove the lower cover 44 in order to obtain access to the passages 199.

As sealing is now only required on the upstream portion of the closure member 16, a single peripheral seal 54 is now provided on the upstream side of the closure member 16 and is retained in position by screws 72 screwed into a retaining element 200. As shown in Figure 7, passages 202 are provided in the closure member 16 to permit pressure in the pipeline 12 to urge the seals 54 against the inner faces of the wall 26 when the valve is in its closed position.

A cover plate 204, which is smaller than the cover plates 120 and 122 of the previous embodiment, is provided in the housing 22 simply to provide access to the screws 72.

In Figure 7, after removing the transverse pin 192, the closure member has been lowered from its dormant open position to its operative closed position with the extension 190 located within the lower cover 44 and the peripheral seal 54 preventing fluid entering the access opening 40 as well as the access opening 38 (not shown in Figure 7). The lower cover 44 now has a flushing outlet 206 with a removable cover (not shown) normally fitted onto a flange 208. Accordingly, if any sediment should accumulate in the lower cover 44 while the valve is in its Figure 6 dormant position, the sediment can be flushed out via the outlet 206 before the closure member is moved to its closed Figure 7 position. Also while in the Figure 7 position, the lower cover 44 can be removed to permit access to the seals 74 should they need replacement, again without taking the pipeline 12 out of commission. When the valve is in its Figure 6 position, the seal 54 can of course be serviced by removing the housing 22 whereafter the closure member 16 can be removed from the housing 22. The housing 22 of the Figures 6 and 7 embodiment can be used in conjunction with a plurality of different valves 10 while the valves are in their dormant open positions. It is therefore not necessary to have a separate housing 22 for each valve 10, eg in an elongated pipeline.

The Figures 6 and 7 embodiment is therefore of an even simpler construction than the previous embodiment yet can be used effectively to close off the pipeline 12 to permit servicing of the valve 14. Servicing of the valve 10 is still readily possible without affecting fluid flow along the pipeline 12.

## Claims

1. A valve characterised in that it comprises:
a housing (20) having an inlet (30) and an outlet (32) and at least one closable access opening (38), the housing (20) defining a flow path along its interior from the inlet (30) to the outlet (32);
a closure member (16) located in the housing (20) and movable between an operative position in which it is intersected by the flow path and an inoperative position in which it is clear of the flow path and projects out of the housing (20) via the access opening (38);
a peripheral seal (54) on the closure member (16) and engaging the housing (20) to seal off the flow passage from the remainder of the interior of the housing (20) when the closure member (16) is in its operative position; and
a further seal (74) co-operating with the housing (20) for sealing off the flow passage from the access opening (38) when the closure member (16) is in its inoperative position.

2. A valve as claimed in claim 1, characterised in that the closure member (16) has an opening (18) therethrough which permits flow along the flow path when the closure member (16) is in its operative position, the peripheral seal (54) then being provided radially outwardly of the opening (18) defined in the closure member (16).

3. A valve as claimed in claim 2, characterised in that it includes a closure plate (24) for releasable mounting on the closure member (16) to close off and seal the opening (18) in the closure member (16), to close off the flow passage and isolate the inlet (30) from the outlet (32), when the closure member (16) is in its operative position.

4. A valve as claimed in claim 1, characterised in that the closure member (16) is in the form of a solid gate which is displaceable from its operative closed position whereby it blocks the flow path, to its inoperative position out of the flow path thereby to permit fluid flow along the flow path through the housing (20).

5. A valve as claimed in any one of the preceding claims, characterised in that the further seal (74) is mounted on the closure member (16), the further seal (74) acting to engage the housing (20) to seal off the flow passage from the access opening when the closure member (16) is in its inoperative position.

6. A valve as claimed in claim 5, characterised in that the housing (20) has a further access opening (40), the access openings (38,40) being spaced from each other and the further access opening (40) being arranged to permit access to and maintenance or replacement of the further seal (74) when the closure member (16) is displaced into the further access opening (40).

7. A valve as claimed in any one of the preceding claims, characterised in that the peripheral seal (54) and the further seal (74) have passages (194,202) in communication with the flow path thereby to permit pressure in the flow path to urge the seals (54,74) onto their seats.

8. A valve as claimed in any one of the preceding claims, characterised in that it includes a further housing (22) releasably connected to the access opening (38) into which the closure member (16) projects when it is in its inoperative position, the further housing (22) having at least one door (120,122,204) therein, providing access to the closure member (16) when it is in the inoperative position.

9. A valve as claimed in claim 8 insofar as it is dependent upon claim 3, characterised in that it includes mounting means (176) within the further housing (22) for storing the closure plate (24) in an inoperative position while the valve is in its inoperative position.

FIG 1

FIG 2

FIG 3

FIG 4

FIG 5

EP 0 425 245 A2

FIG 6

FIG 7

14